# EUROPEAN PATENT SPECIFICATION

(11) **EP 2 846 384 B1**
(45) Date of publication and mention of the grant of the patent: **20.03.2019**
(21) Application number: 13183044.0
(22) Date of filing: 04.09.2013
(51) Int. Cl.: H01M 4/66, H01M 4/74, H01M 6/40

(54) **THIN AND FLEXIBLE ELECTROCHEMICAL CELL**
DÜNNE UND FLEXIBLE ELEKTROCHEMISCHE ZELLE
CELLULE ÉLECTROCHIMIQUE MINCE ET SOUPLE

(43) Date of publication of application: 11.03.2015
(73) Proprietor: VARTA Microbattery GmbH, 73479 Ellwangen (DE); Saati S.p.A., 20025 Legnano (IT)
(72) Inventor: Wendler, Michael, 73765 Neuhausen (DE); Lucignano, Carmine, 21049 Tradate (VA) (IT)
(74) Representative: Patentanwaltskanzlei Cartagena

(56) References cited:
- EP-A1- 2 408 046
- WO-A2-02/058172
- GB-A- 1 212 344
- US-A1- 2012 129 047

## Description

The present invention relates to thin and flexible electrochemical cells, in particular cells produced by printing or slot-die-coating technology.

The term "battery" originally meant a plurality of electrochemical cells connected in series. However, single electrochemical cells are nowadays frequently also referred to as batteries. During the discharge of a battery, an energy-supplying chemical reaction made up to two electrically coupled but physically separate subreactions takes place. One subreaction taking place at a comparatively low redox potential proceeds at the negative electrode, while a subreaction at a comparatively higher redox potential proceeds at the positive electrode. During discharge, electrons are liberated at the negative electrode by an oxidation process, resulting in flow of electrons via an external load to the positive electrode which takes up a corresponding quantity of electrons. A reduction process thus takes place at the positive electrode. At the same time, an ion current corresponding to the electrode reaction occurs within the cell. This ion current is achieved by means of an ionically conductive electrolyte. In secondary cells and batteries, this discharge reaction is reversible, and it is thus possible to reverse the transformation of chemical energy into electric energy which occurs during discharge. If the terms anode and cathode are used in this context, the electrodes are generally named according to their discharge function. In such cells, the negative electrode is thus the anode, and the positive electrode is the cathode.

For an increasing number of applications thin batteries are needed which are more flexible and light-weight than conventional batteries. Very thin batteries are often produced by printing technologies. However, printed electrodes are often are brittle and tend to break under mechanical stress and motions.

EP 2 408 046 A1 discloses an electrochemical cell with an electrode comprising two sheets A and B of an electrically conductive nonwoven fabric, wherein active material is filled in pores between constituent fibers of sheet A and/or active material coats the constituent fibers.

GB 1 212 344 A discloses an electrode plate comprising fabrics of synthetic monofilaments. The fabrics do not serve as current collectors. Instead, they have a protective function.

US 2012/0129047 A1 discloses three-dimensional collectors for non-aqueous electrolyte secondary batteries. The collectors consist of a woven fabric that is coated with a metal film. A collector comprising two different meshes with different diameters is not disclosed.

WO 02/058172 A2 discloses an electrode for an electrochemical arrangement which comprises a structured support layer. The support layer comprises a three-dimensional web of electrically conductive flexible fibres. However, a collector comprising two different meshes with different diameters is not disclosed.

There is an obvious need for thin batteries having a flexible design and being resistant against mechanical impacts, bending and folding.

This object is achieved by the electrochemical cell having the features of claim 1. Preferred embodiments of the cell of the invention are indicated in dependent claims 2 to 10.

Like conventional cells the electrochemical cell according to the invention has at least one positive electrode, at least one negative electrode and at least one separator arranged between the electrodes. At least one of the electrodes, preferably all electrodes of the cell, comprises a current collector.

In contrast to conventional cells at least one of the electrodes of the cell comprises a first, coarser mesh and a second, finer mesh. The first mesh and the second mesh differ in that the first mesh consists of threads having a larger diameter than the threads of which the second mesh consists.

Preferably the first mesh has mesh openings having a larger opening width than the openings of the second mesh.

For example the first mesh has 26 threads per cm, a thread diameter of 120 micrometers (µm) with a mesh opening of 265 µm and a thickness of 223 µm wherein the second mesh has 43 threads per cm, a thread diameter of 61 µm with a mesh opening of 170 µm and a total thickness of 105 µm.

Usually the first mesh has both threads with a larger diameter as well as mesh openings having a larger opening width.

At least one of the meshes is coated with an electrically conducting material. The coated threads act as current collectors of the at least one electrode. In a first preferred embodiment the second mesh is coated with the electrically conducting material, wherein the first mesh is not coated. In a second preferred embodiment the first and the second mesh are both coated with the electrically conducting material. Preferably the threads of the meshes are totally encapsulated by a continuous layerof the electrically conducting material.

If both meshes are coated with an electrically conducting material it is preferred that the coatings consist of the same electrically conducting material.

The first and/or the second mesh are monofilament woven meshes.

It is preferred that the mesh openings of the first and/or the second mesh are filled with an electrochemically active material. In other words, it is preferred that the meshes are embedded in a matrix comprising the electrochemically active material and - if applicable - additional electrode components like a binder and/or a conductive agent.

Surprisingly it has been found that by incorporating the first and the second mesh into the at least one electrode the flexibility and resistance of the electrode was significantly improved without having a negative impact on other properties of the electrode like capacity or internal resistance. The first mesh has the capability to take up large amounts of electrochemically active material wherein the second mesh coated with the electrically conducting material is able to act as current collector having a high conductivity.

The electrochemically active material filling the mesh openings is preferably selected from the group consisting of zinc, manganese dioxide, metal hydride and nickel hydroxide.

The filaments of the first and/or the second mesh preferably consist of a plastic, wherein the plastic is more preferably selected from a group consisting of polyamide plastic, polyester plastic, polyolefin plastics like polypropylene and polyether ether ketone plastic.

The electrically conducting material coating the meshes is preferably a metallic material, more preferably a metal selected from a group consisting of nickel, copper, aluminium and iron or an alloy of at least one of these metals, for example stainless steel. Particularly preferred is a copper coating for zinc electrodes and a nickel coating for manganese dioxide, metal hydride or nickel hydroxide electrodes.

The coating may also comprise more than one layer of an electrically conducting material. For example in order to increase the mesh conductivity a first layer of copper (for example by means of magnetron sputtering) and a second layer of nickel (for example by means of galvanic deposition) may be sequentially deposited on the threads of the meshes.

The coating may be applied on the threads of the meshes by means of processes like sputtering, PVD, chemical reduction or electro-deposition.

The thickness of the coating is preferably in the range between 10 nm und 2 µm.

It is preferred that the diameter of the threads of the first mesh exceeds the diameter of the threads of the second mesh by a factor of at least 1,5, preferably by a factor of between 2 and 50.

The threads of the first mesh preferably have a diameter in the range between 40 µm and 500 µm, more preferably in the range between 61 µm and 260 µm.

Further, it is preferred that the threads of the second mesh have a diameter in the range between 15 µm and 300 µm, preferably in the range between 27 µm and 145 µm.

The opening width of the mesh openings of the first mesh preferably exceeds the opening width of the mesh openings of the second mesh by a factor of at least 1,1, preferably by a factor of between 1,5 and 100.

In a preferred embodiment the at least one electrode comprising the first and the second mesh and/or the separator are configured as layers. Preferably the electrode and the separator are configured as layer composite, wherein the electrode is in 2-dimensional contact with the separator. The electrode and the separator can be joined for example by a lamination process. The thicknesses of the electrode and separator layers are preferably in the range between 150 µm und 1000 µm.

In the at least one electrode the first and the second mesh are preferably arranged in a stack-like arrangement atop each other. It is preferred that the first mesh is in 2-dimensional contact with the second mesh. It is even more preferred that the meshes are fixed to one another, for example by adhesive bonding, by lamination, in particular by hot melt lamination, by sewing or by ultrasound sealing, thereby forming a textile fabric comprising two mesh-layers.

In order to obtain such a textile fabric reactive polyurethane may deposed between the first and the second mesh on several points or along a line, followed by a pressure treatment in a lamination device and curing of the reactive polyurethane, for example in an oven.

The first, coarser mesh is preferably facing towards the separator layer.

In order to obtain an electrochemical cell according to the present invention a textile fabric consisting of said first and second mesh may be overprinted or coated with a paste or ink formulation containing one of said electrochemically active materials additional electrode components for example using a screen-printing or slot-die-coating technology, thereby filling the mesh openings of the first and the second mesh. In a subsequent step an electrolyte/separator combination as described in DE 102010018071 may be applied via a screen-printing process or slot-die-coating on top of the obtained electrode. The obtained electrode-separator-composite may be combined with an appropriate counter electrode.

Further features of the invention can be derived from the following description of preferred embodiments in conjunction with the dependent claims. The preferred embodiments described are merely for the purposes of illustration and to give a better understanding of the invention and do not in any way constitute a restriction.

### Description of figures

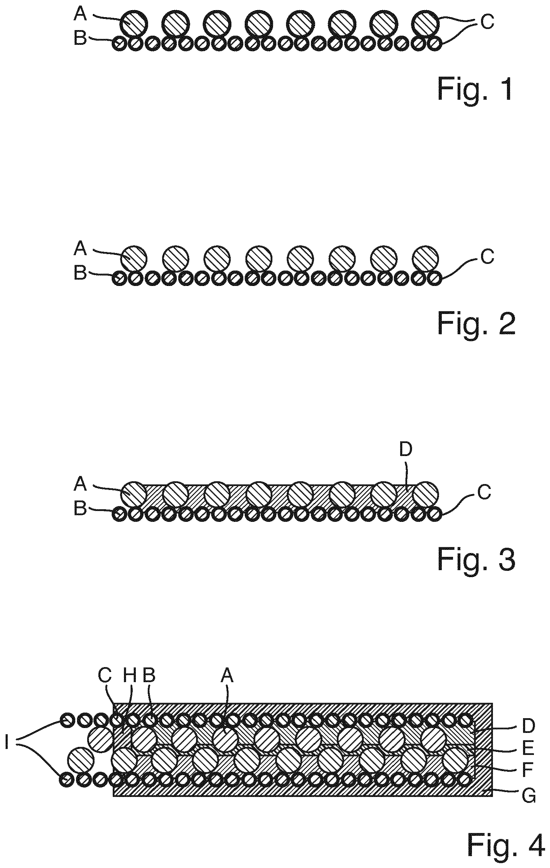

- Fig.1: schematically illustrates a cross section through a preferred example of a textile fabric which is suitable as current collector of an electrochemical cell according to the present invention and which comprises two mesh-layers. The first, coarser mesh (A) and/or the second, finer mesh (B), are both coated with an electrically conducting material, for example with nickel or copper. In a preferred embodiment both meshes, the finer and the coarser, consist of a polyamide. The textile fabric is produced by combining the first and the second mesh in a lamination process. The coating is applied to the meshes preferably after lamination but in some cases also in advance.
- Fig.2: schematically illustrates a cross section through an alternative preferred example of a textile fabric which is suitable as current collector of an electrochemical cell according to the present invention and which comprises two mesh-layers. The first, coarser mesh (A) is not metallised. The second, finer mesh (B), is coated with an electrically conducting material, for example with nickel or copper. In a preferred embodiment both meshes, the finer and the coarser, consist of a polyamide. The textile fabric is produced by combining the first and the second mesh in a lamination process. The coating is applied to the second mesh (B) preferably before lamination.
- Fig.3: shows the textile fabric of Fig.2, wherein the mesh openings of mesh (A) are filled with an electrochemically active material (D). The electrochemically active material could be a paste or ink formulation which contains zinc, manganese dioxide, metal hydride, nickel hydroxide and so on.
- Fig.4: schematically illustrates a cross section through a preferred example of an electrochemical cell according to the present invention. A first and a second electrode of opposite polarity are connected via the separator layer (E). The separator layer is preferably produced via screen-printing or slot-die-coating. The first electrode comprises the electrochemically active material (D), the second electrode comprises the electrochemically active material (F). Both electrodes comprise the textile fabric of Fig. 2, wherein in both cases the fabric is arranged such that the coarser mesh (A) is facing towards the separator layer (E). The electrochemically active materials (D) and (F) are printed or coated onto the textile fabrics, thereby filling the mesh openings at least of the coarser meshes.
The two electrodes and the separator are enclosed by the housing (G). The open end of the housing is sealed or encapsulated by the sealant (H) which is for example a polysiloxane compound. The two fabrics, in particular the meshes (C) coated with the electrically conducting material, are led through the sealant to the outer part of the cell, thereby providing contact areas (I).

## Claims

1. Electrochemical cell having at least one positive electrode, at least one negative electrode and at least one separator (E) arranged between the electrodes, wherein at least one of the electrodes comprises a layer of a first, coarser mesh (A) and a second, finer mesh (B), wherein
• the first and the second mesh (A) and (B) are monofilament woven meshes, and
• the first mesh (A) consists of threads having a larger diameter than the threads of which the second mesh (B) consists,
and
• the threads of the first mesh (A) and/or the second mesh (B) are coated with an electrically conducting material and serve as current collectors of the at least one electrode.

2. Electrochemical cell according to claim 1, **characterized in that** the first mesh (A) has mesh openings having a larger opening width than the openings of the second mesh (B).

3. Electrochemical cell according to claim 1 or claim 2, **characterized in that** the threads of the first and/or the second mesh (A) and/or (B) consist of a plastic, wherein the plastic is preferably selected from a group consisting of polyamide plastic, polyester plastic, polyolefin plastic and polyether ether ketone plastic.

4. Electrochemical cell according to one of the preceding claims, **characterized in that** the electrically conducting material is a metallic material, preferably a metal selected from a group consisting of nickel, copper, aluminium and iron or an alloy of at least one of these metals.

5. Electrochemical cell according to one of the preceding claims, **characterized in that** the diameter of the threads of the first mesh (A) exceeds the diameter of the threads of the second mesh (B) by a factor of at least 1,5, preferably by a factor of between 2 and 50.

6. Electrochemical cell according to one of the preceding claims, **characterized in that** the opening width of the mesh openings of the first mesh (A) exceeds the opening width of the mesh openings of the second mesh (B) by a factor of at least 1,1, preferably by a factor of between 1,5 and 100.

7. Electrochemical cell according to one of the preceding claims, **characterized in that** the at least one electrode comprising the first mesh (A) and the second mesh (B) and the separator (E) are configured as layers.

8. Electrochemical cell according to claim 7, **characterized in that** one of the sides of the electrode is in 2-dimensional contact with the separator (E).

9. Electrochemical cell according to one claims 7 or 8, **characterized in that** the first mesh (A) and the second mesh (B) are arranged in a stack-like arrangement atop each other, wherein it is preferred that the first mesh (A) is in 2-dimensional contact with the second mesh (B).

10. Electrochemical cell according to one of claims 7 to 9, **characterized in that** the first mesh (A) is facing towards the separator layer (E).

## Patentansprüche

1. Elektrochemische Zelle mit mindestens einer positiven Elektrode, mindestens einer negativen Elektrode und mindestens einem zwischen den Elektroden angeordneten Separator (E), wobei mindestens eine der Elektroden ein erstes, grobmaschiges textiles Flächengebilde (A) und ein zweites, feinmaschiges textiles Flächengebilde (b) umfasst, wobei
• das erste und das zweite textile Flächengebilde aus Monofilamenten gewebte textile Flächengebilde sind
und
• das erste textile Flächengebilde (A) aus Filamenten besteht, die einen größeren Durchmesser aufweisen als die Filamente, aus denen das zweite textile Flächengebilde (B) besteht,
und
• die Filamente des ersten textilen Flächengebildes (A) und/oder des zweiten textilen Flächengebildes (B) mit einem elektrisch leitenden Material beschichtet sind und als Stromableiter der mindestens einen Elektrode dienen.

2. Elektrochemische Zelle nach Anspruch 1, **dadurch gekennzeichnet, dass** das erste textile Flächengebilde (A) Maschenöffnungen aufweist, die eine größere Öffnungsweite haben als die Öffnungen des zweiten textilen Flächengebildes (B).

3. Elektrochemische Zelle nach Anspruch 1 oder nach Anspruch 2, **dadurch gekennzeichnet, dass** die Filamente des ersten und/oder des zweiten textilen Flächengebildes (A) und/oder (B) aus einem Kunststoff bestehen, wobei der Kunststoff vorzugsweise aus der Gruppe bestehend aus Polyamid-Kunststoff, Polyester- Kunststoff, Polyolefin-Kunststoff und Polyetherketon-Kunststoff ausgewählt ist.

4. Elektrochemische Zelle nach einem der vorhergehenden Ansprüche, **dadurch gekennzeichnet, dass** das elektrisch leitende Material ein metallisches Material ist, bevorzugt ein Metall aus der Gruppe bestehend aus Nickel, Kupfer, Aluminium und Eisen, oder eine Legierung mindestens eines dieser Metalle ist.

5. Elektrochemische Zelle nach einem der vorhergehenden Ansprüche, **dadurch gekennzeichnet, dass** der Durchmesser der Filamente des ersten textilen Flächengebildes (A) den Durchmesser der Filamente des zweiten textilen Flächengebildes (B) um einen Faktor von mindestens 1,5, bevorzugt um einen Faktor zwischen 2 und 50, überschreitet.

6. Elektrochemische Zelle nach einem der vorhergehenden Ansprüche, **dadurch gekennzeichnet, dass** die Öffnungsweite der Maschenöffnungen des ersten textilen Flächengebildes (A) die Öffnungsweite der Maschenöffnungen des zweiten textilen Flächengebildes (B) um einen Faktor von mindestens 1,1, bevorzugt um einen Faktor zwischen 1,5 und 100, überschreitet.

7. Elektrochemische Zelle nach einem der vorhergehenden Ansprüche, **dadurch gekennzeichnet, dass** die mindestens eine Elektrode, die das erste textile Flächengebilde (A) und das zweite textile Flächengebilde (B) umfasst und der Separator E als Schichten ausgebildet sind.

8. Elektrochemische Zelle nach Anspruch 7, **dadurch gekennzeichnet, dass** eine der Seiten der Elektrode in zweidimensionalem Kontakt mit dem Separator € steht.

9. Elektrochemische Zelle nach einem der Ansprüche 7 oder 8, **dadurch gekennzeichnet, dass** das erste textile Flächengebilde (A) und das zweite textile Flächengebilde (B) in einer stapelartigen Anordnung übereinander angeordnet sind, wobei es bevorzugt ist, dass das erste textile Flächengebilde (A) in zweidimensionalem Kontakt mit dem zweiten textilen Flächengebilde (B) steht.

10. Elektrochemische Zelle nach einem der Ansprüche 7 bis 9, **dadurch gekennzeichnet, dass** das erste textile Flächengebilde (A) in Richtung der Separatorschicht (E) ausgerichtet ist.

## Revendications

1. Cellule électrochimique ayant au moins une électrode positive, au moins une électrode négative et au moins un séparateur (E) disposé entre les électrodes, au moins une des électrodes comprenant une couche de premières mailles, plus grossières (A), et des deuxièmes mailles, plus fines (B), dans laquelle
• les premières et deuxièmes mailles (A) et (B) sont des mailles tissées monofilaments,
et
• les premières mailles (A) sont composées de fils ayant un plus grand diamètre que les fils dont sont composées les deuxièmes mailles (B),
et
• les fils des premières mailles (A) et/ou des deuxièmes mailles (B) sont enrobés avec un matériau électriquement conducteur et servent de collecteurs de courant de l'au moins une électrode.

2. Cellule électrochimique selon la revendication 1, **caractérisée en ce que** les premières mailles (A) ont des ouvertures de maille ayant une plus grande largeur d'ouverture que les ouvertures des deuxièmes mailles (B) .

3. Cellule électrochimique selon la revendication 1 ou la revendication 2, **caractérisée en ce que** les fils des premières mailles et/ou des deuxièmes mailles (A) et/ou (B) sont constitués d'un plastique, le plastique étant de préférence choisi dans un groupe constitué par un plastique de polyamide, un plastique de polyester, un plastique polyoléfinique et un plastique de polyétheréthercétone.

4. Cellule électrochimique selon une des revendications précédentes, **caractérisée en ce que** le matériau électriquement conducteur est un matériau métallique, de préférence un métal choisi dans un groupe constitué par le nickel, le cuivre, l'aluminium et le fer ou un alliage d'au moins un de ces métaux.

5. Cellule électrochimique selon une des revendications précédentes, **caractérisée en ce que** le diamètre des fils des premières mailles (A) dépasse le diamètre des fils des deuxièmes mailles (B) d'un facteur d'au moins 1,5, de préférence d'un facteur compris entre 2 et 50.

6. Cellule électrochimique selon une des revendications précédentes, **caractérisée en ce que** la largeur d'ouverture des ouvertures de maille des premières mailles (A) dépasse la largeur d'ouverture des ouvertures de maille des deuxièmes mailles (B) d'un facteur d'au moins 1,1, de préférence d'un facteur compris entre 1,5 et 100.

7. Cellule électrochimique selon une des revendications précédentes, **caractérisée en ce que** l'au moins une électrode comprenant les premières mailles (A) et les deuxièmes mailles (B) et le séparateur (E) sont configurés sous forme de couches.

8. Cellule électrochimique selon la revendication 7, **caractérisée en ce qu'**un des côtés de l'électrode est en contact bidimensionnel avec le séparateur (E).

9. Cellule électrochimique selon une des revendications 7 ou 8, **caractérisée en ce que** les premières mailles (A) et les deuxièmes mailles (B) sont disposées dans un agencement de type empilement les unes au-dessus des autres, les premières mailles (A) étant de préférence en contact bidimensionnel avec les deuxièmes mailles (B).

10. Cellule électrochimique selon une des revendications 7 à 9, **caractérisée en ce que** les premières mailles (A) sont tournées vers la couche de séparateur (E).
